# EUROPÄISCHE PATENTANMELDUNG

(11) **EP 4 108 078 A1**
(43) Veröffentlichungstag der Anmeldung: **28.12.2022**
(21) Anmeldenummer: 22180710.0
(22) Anmeldetag: 23.06.2022
(51) Int. Cl.: A01K 1/01

(54) **VERLAGERUNGSANLAGE FÜR EINEN STALL**

(30) Priorität: 23.06.2021 AT 5012721 U
(71) Anmelder: Schauer Agrotronic GmbH, 4731 Prambachkirchen (AT)
(72) Erfinder: HUMER, Johannes, 4722 Steegen (AT)
(74) Vertreter: Burger, Hannes

(57) **Zusammenfassung**

Die Erfindung betrifft eine Verlagerungsanlage (1) für einen Stall zur Verlagerung von auf einer Bodenfläche (5) zwischenzeitlich abgelagerten Gegenständen, insbesondere Exkremente von Tieren, Restfutter, Streumittel. Die Verlagerungsanlage (1) umfasst eine Aufnahmevorrichtung (2), einen Verlagerungsschieber (11) und eine Antriebseinheit (12). Die Aufnahmevorrichtung (2) umfasst einen Aufnahmekanal (3) und einen Sammelkanal (4), welcher vertieft in einer vom Aufnahmekanal (3) definierten Bodenfläche (5) angeordnet ist. Weiters ist eine am Verlagerungsschieber (11) angeordnete Abdeckvorrichtung (15) vorgesehen, welche in einer überdeckenden Position bezüglich des zumindest einen Sammelkanals (4) angeordnet ist. Die Abdeckvorrichtung (15) ist auf der Bodenfläche (5) des Aufnahmekanals (3) aufliegend abgestützt und deckt den Sammelkanal (4) an seiner der Bodenfläche (5) zugewendeten Seite mit ihrer Abdecklänge (16) ab.

## Beschreibung

Die Erfindung betrifft eine Verlagerungsanlage für einen Stall zur Verlagerung von auf einer Bodenfläche zwischenzeitlich abgelagerten Gegenständen, insbesondere von Tierexkrementen, Restfutter, Streumittel.

Eine gattungsgemäß ausgebildete Verlagerungsanlage zum Auffangen und dem Abtransport von zwischenzeitlich darauf abgelagerten Gegenständen in einem Stall umfasst eine Aufnahmevorrichtung für diese Gegenstände. Die Aufnahmevorrichtung umfasst einen Aufnahmekanal und einen mittig in diesem angeordneten Sammelkanal. Der Aufnahmekanal definiert die Bodenfläche, wobei der Sammelkanal sich in Richtung der Länge des Aufnahmekanals erstreckt und sich ausgehend von der Bodenfläche vertieft in den die Bodenfläche bildenden Körper hinein erstreckt. Der Aufnahmekanal endet an zumindest einem Längs-Endbereich in einem Abgabeabschnitt. Weiters umfasst die Verlagerungsanlage einen Verlagerungsschieber und eine mit diesem in Antriebsverbindung stehende Antriebseinheit. Der Verlagerungsschieber ist auf der Bodenfläche auflagernd abgestützt. Die Antriebseinheit umfasst einen Antrieb und ein Zugmittel, welches mit dem Verlagerungsschieber verbunden ist und weiters mit dem Antrieb in Antriebsverbindung steht. Mittels des Antriebs und des Zugmittels ist der Verlagerungsschieber auf der Bodenfläche des Aufnahmekanals der Aufnahmevorrichtung entlang eines Verstellwegs hin und her bewegbar. Beim Verlagerungsvorgang konnte eine nachträgliche Vermischung von Kot mit dem Urin im Bereich des Sammelkanals nicht ausgeschlossen werden.

Aufgabe der vorliegenden Erfindung war es, eine Verlagerungsanlage zur Verfügung zu stellen, mittels derer ein Benutzer in der Lage ist, während der Verlagerungsbewegung des Verlagerungsschiebers eine Vermischung von bereits im Wesentlichen voneinander getrennten Bestandteilen der abgelagerten Gegenstände, insbesondere von Kot und Urin, zu vermeiden.

Diese Aufgabe wird durch eine Verlagerungsanlage gemäß den Ansprüchen gelöst.

Die erfindungsgemäße Verlagerungsanlage ist in einem Stall zur Verlagerung von auf einer Bodenfläche zwischenzeitlich abgelagerten Gegenständen vorgesehen. Als Gegenstände zählen unter anderem Exkremente von Tieren, Restfutter, Streumittel oder dergleichen. Die Verlagerungsanlage umfasst
- eine Aufnahmevorrichtung, welche Aufnahmevorrichtung zur Aufnahme der zwischenzeitlich abgelagerten Gegenstände dient. Die Aufnahmevorrichtung umfasst einen Aufnahmekanal und zumindest einen Sammelkanal, welcher Aufnahmekanal die Bodenfläche definiert und in Verlagerungsrichtung gesehen eine Länge und in Querrichtung dazu eine Breite aufweist, wobei der zumindest eine Sammelkanal sich in Richtung der Länge des Aufnahmekanals erstreckt und ausgehend von der Bodenfläche vertieft in der Bodenfläche angeordnet oder ausgebildet ist, und wobei der Aufnahmekanal an zumindest einem Längs-Endbereich in einem Abgabeabschnitt endet,
- einen Verlagerungsschieber, welcher Verlagerungsschieber auf der Bodenfläche auflagernd abgestützt ist,
- eine Antriebseinheit mit zumindest einem Antrieb und zumindest einem Zugmittel, insbesondere ein Seil oder eine Kette, welches zumindest eine Zugmittel mit dem Verlagerungsschieber verbunden ist und weiters mit dem zumindest einen Antrieb in Antriebsverbindung steht, wobei der Verlagerungsschieber mittels des Antriebs und des Zugmittels auf der Bodenfläche des Aufnahmekanals der Aufnahmevorrichtung entlang eines Verstellwegs hin und her bewegbar ist, wobei zusätzlich und weiters noch vorgesehen ist,
- dass zumindest eine Abdeckvorrichtung vorgesehen ist, welche zumindest eine Abdeckvorrichtung an dem Verlagerungsschieber angeordnet und mit diesem bewegungsverbunden ist,
- dass die zumindest eine Abdeckvorrichtung in einer überdeckenden Position bezüglich des zumindest einen Sammelkanals angeordnet ist und eine Abdecklänge in Richtung der Länge der Bodenfläche des Aufnahmekanals definiert, und
- dass die zumindest eine Abdeckvorrichtung auf der Bodenfläche des Aufnahmekanals aufliegend abgestützt ist und den Sammelkanal an seiner der Bodenfläche zugewendeten Seite mit ihrer Abdecklänge abdeckt.

Der dadurch erzielte Vorteil liegt darin, dass so vor dem Beginn der Verlagerungsbewegung nur ein eher geringer Anteil an pastösen oder festeren bis festen Bestandteilen der abgelagerten Gegenstände in den vertieft in der Bodenfläche ausgebildeten Sammelkanal gelangt und bereits eine gewisse Abtrennung der fließfähigen Bestandteile von den pastösen oder festeren bis festen Bestandteile erfolgt. Durch das zusätzliche Vorsehen der zumindest eine Abdeckvorrichtung, wird der schlitzförmige Öffnungsabschnitt des Sammelkanals im Ausmaß der gewählten Abdecklänge der Abdeckvorrichtung abgedeckt und so ein ungewolltes Hineinfallen von diesen auf der Bodenfläche befindlichen Gegenständen verhindert. Durch die Verlagerungsbewegung werden die abgelagerten Gegenstände von dem Verlagerungsschieber mitgenommen und in Richtung auf den Abgabeabschnitt hin transportiert. So erfolgt auch eine Ansammlung oberhalb des Sammelkanals, wobei ein Eindringen oder Hineinfallen in diesen von der Abdeckvorrichtung verhindert wird. Damit wird eine nachträgliche und erneute Vermischung insbesondere von Urin bzw. Harn und Kot verhindert und damit die Bildung von zusätzlichem Ammoniak unterbunden.

Weiters kann es vorteilhaft sein, wenn die Bodenfläche des Aufnahmekanals im Querschnitt bezüglich seiner Längserstreckung gesehen ausgehend von einem linken Längsrandbereich in Richtung auf den zumindest einen Sammelkanal und ausgehend von einem rechten Längsrandbereich in Richtung auf den zumindest einen Sammelkanal jeweils abfallend geneigt verlaufend ausgebildet ist. Damit kann bereits eine noch bessere und vor allem leichtere Abtrennung der fließfähigen Bestandteile von den pastösen oder festeren bis festen Bestandteilen erzielt werden. So kann weiters die Kontaktdauer, insbesondere zwischen dem Urin und dem Kot, geringer gehalten werden.

Eine andere Ausführungsform zeichnet sich dadurch aus, dass die zumindest eine Abdeckvorrichtung in Richtung der Verlagerungsbewegung des Verlagerungsschiebers hin zum Abgabeabschnitt gesehen, ausgehend vom Verlagerungsschieber vorragend angeordnet oder ausgebildet ist. Durch das Vorsehen der zumindest einen Abdeckvorrichtung, welche so in Richtung der Vorwärtsbewegung des Verlagerungsschiebers während der Verlagerungsbewegung diesem vorgeordnet mitbewegt wird, wird der schlitzförmige Öffnungsabschnitt des Sammelkanals im Ausmaß der gewählten Abdecklänge der Abdeckvorrichtung abgedeckt und ein ungewolltes Hineinfallen von diesen auf der Bodenfläche befindlichen Gegenständen in den Sammelkanal verhindert.

Eine weitere mögliche Ausführungsform hat die Merkmale, dass die Abdecklänge der zumindest einen Abdeckvorrichtung einen Längenwert aufweist, der aus einem Längen-Wertebereich stammt, dessen untere Grenze 0,5 m, insbesondere 1,0 m, und dessen obere Grenze 3,0 m, insbesondere 1,5 m, beträgt. Damit kann eine Anpassung an unterschiedliche Längserstreckungen der Aufnahmevorrichtung durchgeführt und auf diese Bedacht genommen werden. Zumeist wird die Abdecklänge bei einer größeren Längenausdehnung der Aufnahmevorrichtung größer als bei einer dazu kürzeren Längenausdehnung gewählt.

Eine weitere Ausbildung sieht vor, dass die zumindest eine Abdeckvorrichtung einen im Wesentlichen T-förmig ausgebildeten Querschnitt mit einem Flansch und zumindest einen davon vorragenden Steg aufweist und der zumindest eine Steg in den Sammelkanal hineinragt. Damit kann einerseits mit dem Flansch eine aufliegende Abstützung auf der Bodenfläche und andererseits mit dem zumindest einen Steg eine Längsführung der Abdeckvorrichtung im schlitzförmigen Öffnungsabschnitt des Sammelkanals erzielt werden.

Eine andere Ausführungsform zeichnet sich dadurch aus, dass die zumindest eine Abdeckvorrichtung mehrere in Richtung ihrer Längserstreckung hintereinander angeordnete Abdeckelemente umfasst und unmittelbar hintereinander angeordnete Abdeckelemente jeweils mittels einer Gelenkanordnung gelenkig miteinander verbunden sind. Damit kann im Bereich des Abgabeabschnitts mit einem geringeren Platzbedarf das Auslangen gefunden werden. Weiters kann so auch die Abdecklänge an die jeweiligen Anforderungen rasch und einfach angepasst werden. Weiters kann damit aber auch eine bessere Anlage auf der Bodenfläche und eine damit verbundene verbesserte Abdeckwirkung erzielt werden.

Eine weitere bevorzugte Ausführungsform ist dadurch gekennzeichnet, dass in der gestreckten Stellung von den hintereinander und unmittelbar zueinander benachbart befindlichen Abdeckelementen deren jeweilige Flansche zueinander unmittelbar benachbart angeordnet sind oder aneinander anliegend angeordnet sind. So kann eine zusätzliche gegenseitige Abstützwirkung bei der Vorwärtsbewegung erzielt werden.

Weiters kann es vorteilhaft sein, wenn mehrere erste Abdeckelemente vorgesehen sind, welche erste Abdeckelemente jeweils den ersten Flansch und einen davon vorragenden ersten Steg aufweisen. Durch die zueinander unterschiedliche Ausbildung der Abdeckelemente kann so deren gegenseitige Verbindung oder Kopplung aneinander vereinfacht werden.

Eine andere alternative Ausführungsform zeichnet sich dadurch aus, dass mehrere zweite Abdeckelemente vorgesehen sind, welche zweite Abdeckelemente jeweils den zweiten Flansch und zwei davon vorragende zweite Stege aufweisen und die beiden zweiten Stege in Querrichtung bezüglich der Längserstreckung sowie in einer Horizontalebene liegend in einem Stegabstand voneinander beabstandet angeordnet sind. Damit wird die gegenseitige Verbindungsmöglichkeit noch zusätzlich verbessert. Weiters kann damit auch eine bessere zentrale und symmetrische Kraftweiterleitung zwischen den unmittelbar hintereinander angeordneten ersten und zweiten Abdeckelementen erzielt werden.

Eine weitere mögliche und gegebenenfalls alternative Ausführungsform hat die Merkmale, dass in Richtung der Längserstreckung der Abdeckvorrichtung gesehen, jeweils abwechselnd ein erstes Abdeckelement und ein zweites Abdeckelement angeordnet sind und dabei der erste Steg des ersten Abdeckelements teilweise zwischen die beiden voneinander beabstandet angeordneten zweiten Stege des zweiten Abdeckelements hineinragt und die Gelenkanordnung im Überdeckungsbereich der jeweiligen Stege angeordnet oder ausgebildet ist. Damit kann die Kraftübertragung durch eine zweischnittige Verbindung im Bereich der Gelenkanordnung noch zusätzlich verbessert werden.

Eine weitere Ausbildung sieht vor, dass die zumindest eine Abdeckvorrichtung über ihre Längserstreckung als durchgängiger Profilstab ausgebildet ist. Damit kann eine einfache und vor allem stabile Ausführung der Abdeckvorrichtung geschaffen werden.

Eine andere Ausführungsform zeichnet sich dadurch aus, dass eine Führungsanordnung zur Führung und Abstützung der zumindest einen Abdeckvorrichtung im Bereich des Abgabeabschnitts des Aufnahmekanals vorgesehen ist und die Führungsanordnung auf die vom Aufnahmekanal abgewendete Seite über die Bodenfläche hinaus vorragend ausgebildet ist. So kann der Verlagerungsschieber bis unmittelbar an den Abgabeabschnitt hin bewegt werden und dann trotzdem eine Unterstützung für die Abdeckvorrichtung geschaffen werden.

Eine weitere bevorzugte Ausführungsform ist dadurch gekennzeichnet, dass die Führungsanordnung in Querrichtung bezüglich der Länge des Aufnahmekanals sowie in einer Normalebene auf die Horizontalebene gesehen einen konvex gekrümmten Längsverlauf in Richtung auf die von der Bodenfläche abgewendete Seite aufweist. So kann insbesondere bei mehreren hintereinander und gelenkig miteinander verbundenen Abdeckelementen eine platzsparende Unterstützung geschaffen werden. Darüber hinaus können so auch Kollisionen mit benachbart befindlichen Bauteilkomponenten der Verlagerungsanlage vermieden werden.

Weiters kann es vorteilhaft sein, wenn der Aufnahmekanal auf seiner von der Bodenfläche abgewendeten Oberseite von einem Spaltenboden abgedeckt ist. Damit kann eine Unterfluranordnung geschaffen werden, wobei sich die Tiere oberhalb des Spaltenbodens befinden und die abzutransportierenden Gegenstände in die unterhalb desselben befindliche Aufnahmevorrichtung hinunter fallen und von dort weg befördert werden können.

Zum besseren Verständnis der Erfindung wird diese anhand der nachfolgenden Figuren näher erläutert.

Es zeigen jeweils in stark vereinfachter, schematischer Darstellung:
- Fig. 1: eine Verlagerungsanlage mit Verlagerungsschieber und Abdeckvorrichtung, in Draufsicht;
- Fig. 2: die Verlagerungsanlage nach Fig. 1 in Seitenansicht geschnitten, gemäß den Linien II-II in Fig. 1;
- Fig. 3: die Verlagerungsanlage nach den Fig. 1 und 2 in Ansicht geschnitten, gemäß den Linien III-III in Fig. 2;
- Fig. 4: die Abdeckvorrichtung der Verlagerungsanlage, in schaubildlicher Darstellung;
- Fig. 5: die Abdeckvorrichtung nach Fig. 4, in Seitenansicht geschnitten, gemäß den Linien V-V in Fig. 4;
- Fig. 6: die Abdeckvorrichtung nach den Fig. 4 und 5 in Ansicht geschnitten, gemäß den Linien VI-VI in Fig. 4.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf, "aufweisend", "schließt ein", "einschließlich", "enthält", "enthaltend" und jegliche Variationen dieser eine nicht ausschließliche Einbeziehung abdecken.

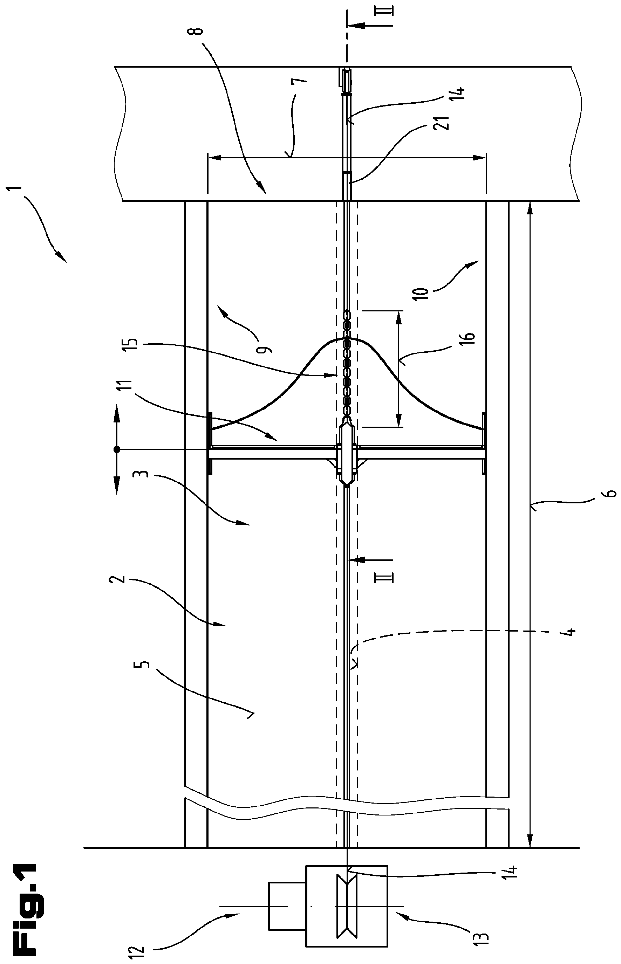

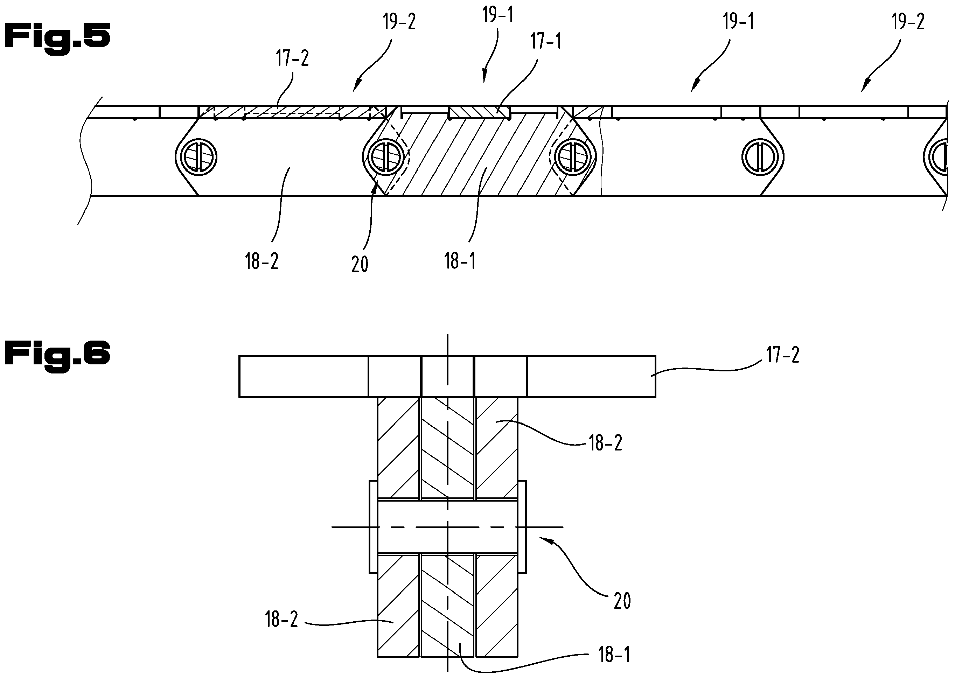

In den Fig. 1 bis 6 ist eine Verlagerungsanlage 1 und sind deren Bauteilkomponenten gezeigt, welche für einen Stall vorgesehen ist und sind. Diese dient zur Verlagerung von Gegenständen, wie Exkremente, Restfutter, Streumittel oder dergleichen oder ist dazu ausgebildet. Als Exkremente werden allgemein ausgeschiedene Produkte aus dem Harntrakt - nämlich Urin - sowie aus dem Magen-Darm-Trakt - nämlich Kot - verstanden. Die Verlagerung erfolgt mittels einer eigenen, nachfolgend noch näher beschriebenen Verlagerungsvorrichtung in Form einer relativen Verlagerungsbewegung, welche bevorzugt in geradliniger Fortbewegungsrichtung durchgeführt wird. Die Fortbewegungsrichtung kann auch als Verlagerungsrichtung bezeichnet werden.

Um die Bildung und/oder Emission von Ammoniak im Stall so gering wie möglich zu halten, wird eine Kot-Urin Trennung im Bereich der Verlagerungsanlage 1 angestrebt bzw. sollte diese erzielt werden. Die Bildung von Ammoniak erfolgt aus dem Harnstoff mit dem dafür verantwortlichen und sich im Kot befindlichen Enzym Urease. Von dem Enzym Urease wird der Harnstoff unter anderem in Ammoniak und Kohlenstoffdioxid gespalten. Aus diesem Grund soll bereits im Bereich der Verlagerungsanlage 1 eine möglichst weitgehend Trennung von Urin und Kot erzielt werden.

Im Stall ist dafür eine eigens ausgebildete Aufnahmevorrichtung 2 vorgesehen, welche zur Aufnahme der zwischenzeitlich abgelagerten Gegenstände dient. Da es sich dabei hauptsächlich und in einem überwiegenden Anteil um die Exkremente der Tiere handelt, umfasst die Aufnahmevorrichtung 2 einen Aufnahmekanal 3 und zumindest einen Sammelkanal 4. Der Aufnahmekanal 3 ist in seinem Querschnitt gesehen in etwa U-förmig und nach oben offen ausgebildet. Weiters definiert der Aufnahmekanal 3 bodenseitig eine Bodenfläche 5, welche auch als Schieberfläche bezeichnet werden kann. Zumeist weist der Aufnahmekanal 3 eine größere oder längere Längserstreckung auf und definiert in dieser Richtung eine Länge 6, welche sich in gleicher Richtung wie die Verlagerungsrichtung erstreckt. Im Wesentlichen ist die Bodenfläche 5 in einer Horizontalebene verlaufend oder liegend angeordnet. In Querrichtung zur Längserstreckung oder der Länge 6 weist der Aufnahmekanal 3 eine Breite 7 auf. Die beiden Abmessungen des Aufnahmekanals 3 sind auf die Horizontalebene bezogen. Der Aufnahmekanal 3 kann auch als Schieberkanal und der Sammelkanal 4 als Entwässerungsrinne bezeichnet werden.

Der zumindest eine Sammelkanal 4 erstreckt sich in Richtung der Länge 6 des Aufnahmekanals 3 und ist ausgehend von der Bodenfläche 5 vertieft in der Bodenfläche 5 angeordnet oder ausgebildet und erstreckt sich in den die Bodenfläche 5 ausbildenden Körper hinein. Bevorzugt ist der Sammelkanal 4 in paralleler Ausrichtung zur Längserstreckung des Aufnahmekanals 3 und somit auch zu diesem parallel verlaufend angeordnet. Weiters erfolgt die Anordnung oder Ausbildung bevorzugt mittig bezüglich der Breite 7 des Aufnahmekanals 3. Der Aufnahmekanal 3 endet an zumindest einem seiner Längs-Endbereiche in einem Abgabeabschnitt 8, zu welchem die auf oder an der Bodenfläche 5 befindlichen Exkremente hin verlagert oder transportiert werden sollen.

Um bereits im Bereich der Aufnahmevorrichtung 2 eine gewisse Trennung der eher fließfähigen oder flüssigen Bestandteile der Exkremente - nämlich dem Urin - von den eher pastösen oder festeren bis festen Bestandteile - nämlich dem Kot - zu erzielen, ist dazu der Sammelkanal 4 vorgesehen.

Der Aufnahmekanal 3 weist in Richtung seiner Längserstreckung und somit in Richtung seiner Länge 6 betrachtet, einen linken Längsrandbereich 9 und einen rechten Längsrandbereich 10 auf. Die beiden Längsrandbereiche 9, 10 sind zumeist von Wandflächen des Aufnahmekanals 3 gebildet. Um eine zumeist selbsttätige Fließbewegung der eher fließfähigen oder flüssigen Bestandteile der Exkremente von der Bodenfläche 5 hin in den zumindest einen Sammelkanal 4 zu erzielen, kann die Bodenfläche 5 im Querschnitt bezüglich ihrer Längserstreckung gesehen ausgehend vom linken Längsrandbereich 9 in Richtung auf den zumindest einen Sammelkanal 4 und ausgehend vom rechten Längsrandbereich 10 in Richtung auf den zumindest einen Sammelkanal 4 jeweils abfallend geneigt verlaufend ausgebildet sein. Der jeweilige abfallende Neigungswinkel bezüglich der Horizontalebene beträgt zumeist wenige Grad. Dabei kann der Neigungswinkel z.B. zwischen 1° und 15° betragen. So bildet sich zwischen dem linken Längsrandbereich 9 und dem zumindest einen Sammelkanal 4 ein erster Bodenflächenabschnitt der Bodenfläche 5 und zwischen dem rechten Längsrandbereich 10 und dem zumindest einen Sammelkanal 4 ein zweiter Bodenflächenabschnitt der Bodenfläche 5 aus. In Summe bilden die beiden Bodenflächenabschnitte die gesamte Bodenfläche 5 aus, welche lediglich von dem schlitzförmigen Öffnungsabschnitt des Sammelkanals 4 unterbrochen ausgebildet ist.

Weiters umfasst die Verlagerungsanlage 1 einen Verlagerungsschieber 11 und eine Antriebseinheit 12 zur Durchführung der relativen Verlagerungsbewegung des Verlagerungsschiebers 11 entlang der Aufnahmevorrichtung 2. In bekannter Weise ist der Verlagerungsschieber 11 zumeist schildförmig ausgebildet und erstreckt sich in Querrichtung bezüglich der Länge 6 bevorzugt zwischen den beiden Längsrandbereichen 9, 10 des Aufnahmekanals 3. Der Verlagerungsschieber 11, welcher auch als Entmistungsschieber bezeichnet werden kann, liegt auf der Bodenfläche 5 auf und ist an deren Querschnittsform angepasst, um so eine gute Räumwirkung während der Verstellbewegung entlang des Verstellwegs hin zum Abgabeabschnitt 8 erzielen zu können. Weiters kann der Verlagerungsschieber 11 auch noch mit einem eigenen Räumschild in den Sammelkanal 4 hineinragen und auch in diesem befindliche Exkremente während oder im Zuge der Verstellbewegung verlagern zu können. Dies kann ebenfalls hin in Richtung zum Abgabeabschnitt 8 erfolgen. Eine getrennte Abgabe von Urin und Kot kann in diesem Bereich vorgesehen sein.

Die Antriebseinheit 12 umfasst zumindest einen Antrieb 13 und zumindest ein Zugmittel 14. Das Zugmittel 14 kann z.B. durch ein Seil oder eine Kette gebildet sein und ist mit dem Verlagerungsschieber 11 verbunden oder an diesem befestigt. Auf die Darstellung von Umlenkvorrichtungen und von Führungen für das zumindest eine Zugmittel 14 wird der besseren Übersichtlichkeit halber verzichtet. Nachfolgend sind Möglichkeiten zur Bildung der Antriebseinheit 12 beschrieben und auch eine von diesen vereinfacht angedeutet.

Bei diesem ersten möglichen Ausführungsbeispiel steht das Zugmittel 14 mit dem Antrieb 13 in Antriebsverbindung, wobei der Verlagerungsschieber 11 mittels des Antriebs 13 und des Zugmittels 14 auf der Bodenfläche 5 des Aufnahmekanals 3 der Aufnahmevorrichtung 2 auflagernd entlang seines Verstellwegs hin und her bewegbar ist. Die Durchführung der jeweiligen Verstellbewegungen kann nach Bedarf durchgeführt werden. Das Zugmittel 14 kann durch eine bevorzugt endlose und in sich geschlossene Schlaufe gebildet sein, wodurch das Hin- und Herbewegen des Verlagerungsschiebers 11 einfach realisiert werden kann. Die Anordnung des zumindest einen Antriebs 13 sowie möglicher Umlenkvorrichtungen kann nach Bedarf gewählt werden.

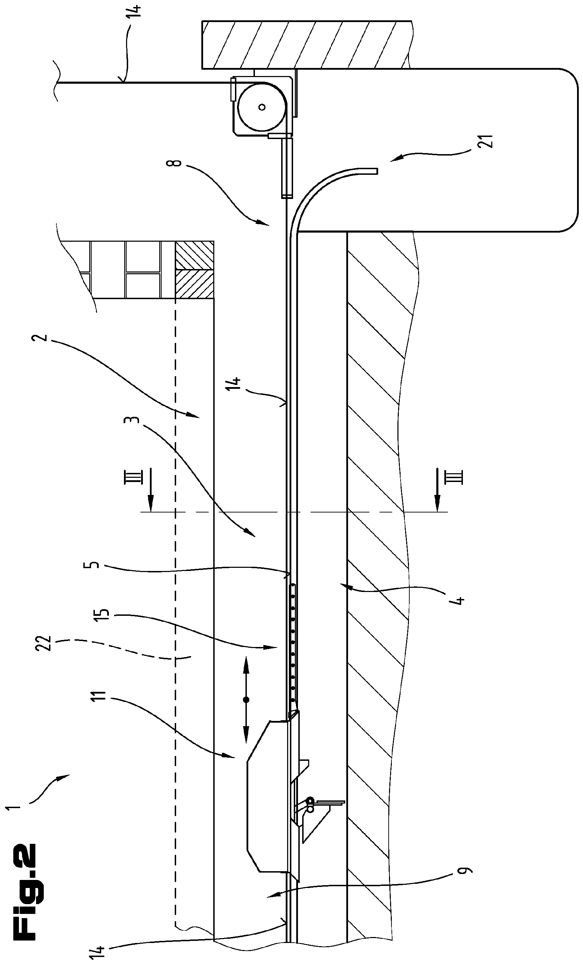

Es wäre aber auch unabhängig davon möglich, ein erstes Zugmittel 14 vorzusehen, welches sich ausgehend vom Verlagerungsschieber 11 hin zum Abgabeabschnitt 8 erstreckt und dort mit einem ersten Antrieb 13-1 in Antriebsverbindung steht. Weiters kann ein zweites Zugmittel 14 vorgesehen sein, welches sich ausgehend vom Verlagerungsschieber auf die vom Abgabeabschnitt 8 abgewendete Seite oder Richtung erstreckt und im Endbereich der Aufnahmevorrichtung 2 mit einem zweiten Antrieb 13-2 in Antriebsverbindung steht. Es wäre aber auch noch möglich, das Zugmittel 14 durchgängig auszubilden und jeweils in den voneinander beabstandeten Endbereichen der Aufnahmevorrichtung 2 jeweils den eigenen Antrieb 13-1 und 13-2 vorzusehen. Der Antrieb 13 oder die Antriebe 13 kann/können z.B. durch elektrisch angetriebene Winden gebildet sein. In diesem Fall kann der erste Antrieb 13-1 als Zugwinde und der zweite Antrieb 13-2 als Rückzugwinde bezeichnet werden. Die in der Fig. 2 im Abgabeabschnitt 8 befindliche und nicht näher bezeichnete Umlenkvorrichtung wäre durch den ersten Antrieb 13-1 zu ersetzen und der in der Fig. 1 dargestellte Antrieb 13 bildet den zweiten Antrieb 13-2 aus. Dies ist jedoch der besseren Übersichtlichkeit nicht näher dargestellt worden.

Der Sammelkanal 4 weist bevorzugt in seinem oberen und der Bodenfläche 5 zugewendeten Öffnungsabschnitt eine eher geringe Schlitzbreite auf, um das Eindringen oder Hineinfallen der eher pastösen oder festeren bis festen Bestandteile der Exkremente in diesen zu minimieren oder zu unterbinden. Weiters kann der schlitzförmige Öffnungsabschnitt des Sammelkanals 4 auch als Längsführung für den Verlagerungsschieber 11 dienen.

Erfolgt nun die relative Verstellbewegung des Verlagerungsschiebers 11 und damit verbunden zumindest die Verlagerungsbewegung der auf der Bodenfläche 5 auflagernden Exkremente oder von Bestandteilen der Exkremente hin zum Abgabeabschnitt 8, werden die zumindest Exkremente oder deren insbesondere festeren Bestandteile in Richtung der Verlagerungsbewegung gesehen vor dem Verlagerungsschieber 11 angehäuft. Damit wird sich ein sogenannter Güllesee vor dem Verlagerungsschieber 11 bilden, welcher in der Fig. 1 mittels einer dicken Linie vor dem Verlagerungsschieber 11 angedeutet ist. Aus diesem Grund erhöht sich die Gefahr und die Möglichkeit, dass während der Verlagerungsbewegung bereits vom Urin abgetrennte Kotbestandteile in den Sammelkanal 4 gelangen und die bereits zuvor erfolgte Kot-Urin-Trennung aufgehoben wird.

Um dies vermeiden oder verhindern zu können, ist zumindest eine Abdeckvorrichtung 15 vorgesehen, welche ihrerseits an dem Verlagerungsschieber 11 angeordnet und mit diesem bewegungsverbunden ist. Weiters ist die zumindest eine Abdeckvorrichtung 15 in einer überdeckenden Position oder Lage bezüglich des zumindest einen Sammelkanals 4 oberhalb desselben angeordnet und definiert eine Abdecklänge 16 in Richtung der Länge 6 der Bodenfläche 5 des Aufnahmekanals 3 gesehen. Die zumindest eine Abdeckvorrichtung 15 ist auf der Bodenfläche 5 des Aufnahmekanals 3 aufliegend abgestützt und deckt den Sammelkanal 4 an seiner der Bodenfläche 5 zugewendeten Seite mit ihrer Abdecklänge 16 ab. Die Anordnung der zumindest einen Abdeckvorrichtung 15 am Verlagerungsschieber 11 kann so erfolgen, dass diese in Richtung der Verlagerungsbewegung des Verlagerungsschiebers 11 hin zum Abgabeabschnitt 8 gesehen, ausgehend vom Verlagerungsschieber 11 vorragend angeordnet oder ausgebildet ist.

Die Abdecklänge 16 der zumindest einen Abdeckvorrichtung 15 kann einen Längenwert aufweisen, der aus einem Längen-Wertebereich stammt, dessen untere Grenze 0,5 m, insbesondere 1,0 m, und dessen obere Grenze 3,0 m, insbesondere 1,5 m, beträgt. Die Abdecklänge 16 ist an die jeweiligen Anlage-Verhältnisse anzupassen und kann auch einen Längenwert von größer 3,0 m aufweisen.

Während der Verlagerungsbewegung wird die zumindest eine Abdeckvorrichtung 15 vom Verlagerungsschieber 11 geschoben und bei der Rückstellbewegung auf die vom Abgabeabschnitt 8 abgewendete Seite oder Richtung von diesem gezogen.

Die zumindest eine Abdeckvorrichtung 15 kann als einfachste Ausführungsform z.B. als durchgängiger und insbesondere biegesteifer Profilstab ausgebildet sein.

Bevorzugt weist die zumindest eine Abdeckvorrichtung 15 einen im Wesentlichen T-förmig ausgebildeten Querschnitt mit einem Flansch 17 und zumindest einen davon vorragenden Steg 18 auf. Der zumindest eine Steg 18 ragt in den schlitzförmigen Öffnungsabschnitt des Sammelkanals 4 hinein und kann somit in diesem in Längsrichtung gesehen darin geführt werden oder sein. Der Flansch 17 liegt seinerseits beidseits des schlitzförmigen Öffnungsabschnitts des Sammelkanals 4 auf der jeweiligen Bodenfläche 5 oder deren Bodenflächenabschnitten des Aufnahmekanals 3 auflagernd darauf auf.

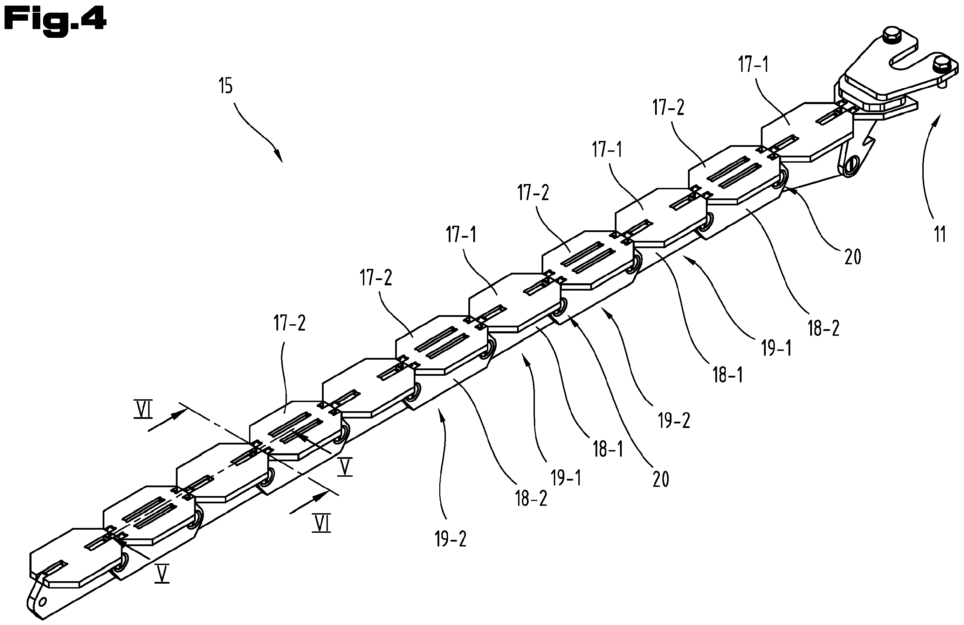

Wie nun besser aus den Fig. 4 bis 6 zu ersehen ist, kann die zumindest eine Abdeckvorrichtung 15 mehrere in Richtung ihrer Längserstreckung hintereinander angeordnete Abdeckelemente 19-1, 19-2 umfassen. Um eine gelenkige Verbindung zwischen jeweils unmittelbar hintereinander befindlichen Abdeckelementen 19-1, 19-2 zu schaffen, kann eine Gelenkanordnung 20 vorgesehen sein. Mittels der jeweiligen Gelenkanordnung 20 können jene unmittelbar hintereinander befindlichen Abdeckelemente 19-1, 19-2 auch aneinander gehalten werden. Damit kann eine zusammengehörige Baueinheit der zumindest einen Abdeckvorrichtung 15 geschaffen werden.

Im vorliegenden Ausführungsbeispiel sind mehrere erste Abdeckelemente 19-1 vorgesehen, welche ihrerseits jeweils den ersten Flansch 17-1 und nur einen davon vorragenden ersten Steg 18-1 aufweisen oder umfassen. Weiters sind hier auch noch mehrere zweite Abdeckelemente 19-2 vorgesehen, welche ihrerseits den zweiten Flansch 17-2 und zwei davon vorragende zweite Stege 18-2 aufweisen oder umfassen. Die beiden zweiten Stege 18-2 der zweiten Abdeckelemente 19-2 sind jeweils in Querrichtung bezüglich der Längserstreckung sowie in einer Horizontalebene liegend in einem Stegabstand voneinander beabstandet angeordnet. Damit entsteht ein Längsspalt zwischen den beiden zweiten Stegen 18-2 der zweiten Abdeckelemente 19-2.

Sind jeweils erste Abdeckelemente 19-1 und auch zweite Abdeckelemente 19-2 vorgesehen, sind diese bei dem gezeigten Ausführungsbeispiel jeweils abwechselnd zueinander anzuordnen - also abwechselnd ein erstes Abdeckelement 19-1 und dann ein zweites Abdeckelement 19-2. Je nach Ausbildung des Anschlusses der zumindest einen Abdeckvorrichtung 15 am Verlagerungsschieber 11 kann am Beginn entweder ein erstes Abdeckelement 19-1 oder ein zweites Abdeckelement 19-2 vorgesehen sein. Durch das Vorsehen einer unterschiedlichen Anzahl an ersten Stegen 18-1 und zweiten Stegen 18-2 an den jeweiligen Abdeckelementen 19-1, 19-2 kann der erste Steg 18-1 von den ersten Abdeckelementen 19-1 teilweise zwischen die beiden voneinander beabstandet angeordneten zweiten Stege 18-2 des zweiten Abdeckelements 19-2 hineinragen. Die zuvor beschriebene Gelenkanordnung 20 ist in einem Überdeckungsbereich der jeweiligen ersten Stege 18-1 und zweiten Stegen 18-2 angeordnet oder ausgebildet.

Um eine gewisse Eigensteifigkeit und gegebenenfalls eine Entlastung für die jeweiligen Gelenkanordnungen 20 schaffen zu können, können in der gestreckten Stellung von den jeweils hintereinander und unmittelbar zueinander benachbart befindlichen ersten und zweiten Abdeckelementen 19-1, 19-2 deren jeweilige Flansche 17-1, 17-2 zueinander unmittelbar benachbart angeordnet sein oder aneinander anliegend angeordnet sein.

Je nach gewählter Ausbildung der zumindest einen Abdeckvorrichtung 15 kann im Bereich des Abgabeabschnitts 8 des Aufnahmekanals 3 eine Führungsanordnung 21 vorgesehen oder angeordnet sein. Dies bevorzugt dann, wenn die zumindest eine Abdeckvorrichtung 15 aus mehreren hintereinander angeordneten und auch gelenkig miteinander verbundenen Abdeckelementen 19, insbesondere den ersten Abdeckelementen 19-1 und den zweiten Abdeckelementen 19-2, gebildet ist. Die Führungsanordnung 21 dient zur Führung und Abstützung der zumindest einen Abdeckvorrichtung 15 im Bereich des Abgabeabschnitts 8 an einem Längs-Endbereich des Aufnahmekanals 3 und kann auf die vom Aufnahmekanal 3 abgewendete Seite über die Bodenfläche 5 hinaus vorragend ausgebildet sein. Eine bevorzugte Ausbildung der Führungsanordnung 21 kann so gewählt sein, dass diese in Querrichtung bezüglich der Länge 6 des Aufnahmekanals 3 sowie in einer Normalebene auf die Horizontalebene gesehen einen konvex gekrümmten Längsverlauf in Richtung auf die von der Bodenfläche 5 abgewendete Seite aufweist.

Durch diesen Krümmungsverlauf, welcher z.B. die Form eines Kreisabschnitts aufweisen kann, wird ein Überstand vermieden, wodurch mit einem geringeren Platzbedarf das Auslangen gefunden werden kann auch noch ungewollte Kollisionen mit weiteren Bauteilen der Verlagerungsanlage 1 verhindert werden können. Dabei kann es sich z.B. um einen Endanschlag handeln, welcher den maximalen Verstellweg begrenzt und in weiterer Folge die Förderbewegung oder Vorwärtsbewegung des Verlagerungsschiebers 11 stoppt und zu einem Abschalten des Antriebs 13 führt. Der Längsverlauf entlang des Kreisabschnitts kann z.B. einen Viertelkreis umfassen, um ausgehend von der Horizontalebene in eine dazu lotrechte oder normale Längserstreckung auf die von der Bodenfläche 5 abgewendete Seite überzuleiten.

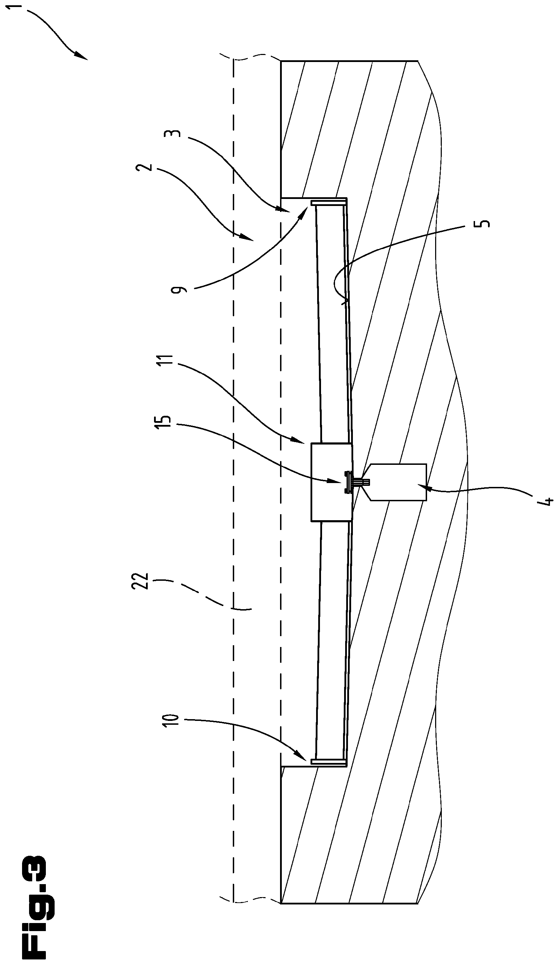

Wie nun in den Fig. 2 und 3 noch angedeutet, kann der Aufnahmekanal 3 als Unterflurkanal ausgebildet sein, wobei dieser dann auf seiner von der Bodenfläche 5 abgewendeten Oberseite samt dem darauf befindlichen Verlagerungsschieber 11 z.B. von einem Spaltenboden 22 abgedeckt sein kann. Die Exkremente sowie gegebenenfalls die weiteren Gegenstände gelangen so durch den Spaltenboden hindurch auf die Bodenfläche 5, wobei bereits in diesem Abschnitt eine Trennung von Urin und Kot erfolgt, wie dies zuvor bereits beschrieben worden ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Verlagerungsanlage
- 2: Aufnahmevorrichtung
- 3: Aufnahmekanal
- 4: Sammelkanal
- 5: Bodenfläche
- 6: Länge
- 7: Breite
- 8: Abgabeabschnitt
- 9: linker Längsrandbereich
- 10: rechter Längsrandbereich
- 11: Verlagerungsschieber
- 12: Antriebseinheit
- 13: Antrieb
- 14: Zugmittel
- 15: Abdeckvorrichtung
- 16: Abdecklänge
- 17: Flansch
- 18: Steg
- 19: Abdeckelement
- 20: Gelenkanordnung
- 21: Führungsanordnung
- 22: Spaltenboden

## Patentansprüche

1. Verlagerungsanlage (1), insbesondere Räumungsanlage und/oder Entmistungsanlage, für einen Stall zur Verlagerung von auf einer Bodenfläche (5) zwischenzeitlich abgelagerten Gegenständen, insbesondere Exkremente von Tieren, Restfutter, Streumittel, die Verlagerungsanlage (1) umfasst
- eine Aufnahmevorrichtung (2), welche Aufnahmevorrichtung (2) zur Aufnahme der zwischenzeitlich abgelagerten Gegenstände dient, diese umfasst einen Aufnahmekanal (3) und zumindest einen Sammelkanal (4), welcher Aufnahmekanal (3) die Bodenfläche (5) definiert und in Verlagerungsrichtung gesehen eine Länge (6) und in Querrichtung dazu eine Breite (7) aufweist, wobei der zumindest eine Sammelkanal (4) sich in Richtung der Länge (6) des Aufnahmekanals (3) erstreckt und ausgehend von der Bodenfläche (5) vertieft in der Bodenfläche (5) angeordnet oder ausgebildet ist, und wobei der Aufnahmekanal (3) an zumindest einem Längs-Endbereich in einem Abgabeabschnitt (8) endet,
- einen Verlagerungsschieber (11), welcher Verlagerungsschieber (11) auf der Bodenfläche (5) auflagernd abgestützt ist,
- eine Antriebseinheit (12) mit zumindest einem Antrieb (13) und zumindest einem Zugmittel (14), insbesondere ein Seil oder eine Kette, welches zumindest eine Zugmittel (14) mit dem Verlagerungsschieber (11) verbunden ist und weiters mit dem zumindest einen Antrieb (13) in Antriebsverbindung steht, wobei der Verlagerungsschieber (11) mittels des Antriebs (13) und des Zugmittels (14) auf der Bodenfläche (5) des Aufnahmekanals (3) der Aufnahmevorrichtung (2) entlang eines Verstellwegs hin und her bewegbar ist,
**dadurch gekennzeichnet,**
- **dass** zumindest eine Abdeckvorrichtung (15) vorgesehen ist, welche zumindest eine Abdeckvorrichtung (15) an dem Verlagerungsschieber (11) angeordnet und mit diesem bewegungsverbunden ist,
- **dass** die zumindest eine Abdeckvorrichtung (15) in einer überdeckenden Position bezüglich des zumindest einen Sammelkanals (4) angeordnet ist und eine Abdecklänge (16) in Richtung der Länge (6) der Bodenfläche (5) des Aufnahmekanals (3) definiert, und
- **dass** die zumindest eine Abdeckvorrichtung (15) auf der Bodenfläche (5) des Aufnahmekanals (3) aufliegend abgestützt ist und den Sammelkanal (4) an seiner der Bodenfläche (5) zugewendeten Seite mit ihrer Abdecklänge (16) abdeckt.

2. Verlagerungsanlage (1) nach Anspruch 1, **dadurch gekennzeichnet, dass** die Bodenfläche (5) des Aufnahmekanals (3) im Querschnitt bezüglich seiner Längserstreckung gesehen ausgehend von einem linken Längsrandbereich (9) in Richtung auf den zumindest einen Sammelkanal (4) und ausgehend von einem rechten Längsrandbereich (10) in Richtung auf den zumindest einen Sammelkanal (4) jeweils abfallend geneigt verlaufend ausgebildet ist.

3. Verlagerungsanlage (1) nach Anspruch 1 oder 2, **dadurch gekennzeichnet, dass** die zumindest eine Abdeckvorrichtung (15) in Richtung der Verlagerungsbewegung des Verlagerungsschiebers (11) hin zum Abgabeabschnitt (8) gesehen, ausgehend vom Verlagerungsschieber (11) vorragend angeordnet oder ausgebildet ist.

4. Verlagerungsanlage (1) nach einem der vorhergehenden Ansprüche, **dadurch gekennzeichnet, dass** die Abdecklänge (16) der zumindest einen Abdeckvorrichtung (15) einen Längenwert aufweist, der aus einem Längen-Wertebereich stammt, dessen untere Grenze 0,5 m, insbesondere 1,0 m, und dessen obere Grenze 3,0 m, insbesondere 1,5 m, beträgt.

5. Verlagerungsanlage (1) nach einem der vorhergehenden Ansprüche, **dadurch gekennzeichnet, dass** die zumindest eine Abdeckvorrichtung (15) einen im Wesentlichen T-förmig ausgebildeten Querschnitt mit einem Flansch (17) und zumindest einen davon vorragenden Steg (18) aufweist und der zumindest eine Steg (18) in den Sammelkanal (4) hineinragt.

6. Verlagerungsanlage (1) nach einem der vorhergehenden Ansprüche, **dadurch gekennzeichnet, dass** die zumindest eine Abdeckvorrichtung (15) mehrere in Richtung ihrer Längserstreckung hintereinander angeordnete Abdeckelemente (19-1, 19-2) umfasst und unmittelbar hintereinander angeordnete Abdeckelemente (19-1, 19-2) jeweils mittels einer Gelenkanordnung (20) gelenkig miteinander verbunden sind.

7. Verlagerungsanlage (1) nach Anspruch 6, **dadurch gekennzeichnet, dass** in der gestreckten Stellung von den hintereinander und unmittelbar zueinander benachbart befindlichen Abdeckelementen (19-1, 19-2) deren jeweilige Flansche (17-1, 17-2) zueinander unmittelbar benachbart angeordnet sind oder aneinander anliegend angeordnet sind.

8. Verlagerungsanlage (1) nach Anspruch 6 oder 7, **dadurch gekennzeichnet, dass** mehrere erste Abdeckelemente (19-1) vorgesehen sind, welche erste Abdeckelemente (19-1) jeweils den ersten Flansch (17-1) und einen davon vorragenden ersten Steg (18-1) aufweisen.

9. Verlagerungsanlage (1) nach einem der Ansprüche 6 bis 8, **dadurch gekennzeichnet, dass** mehrere zweite Abdeckelemente (19-2) vorgesehen sind, welche zweite Abdeckelemente (19-2) jeweils den zweiten Flansch (17-2) und zwei davon vorragende zweite Stege (18-2) aufweisen und die beiden zweiten Stege (18-2) in Querrichtung bezüglich der Längserstreckung sowie in einer Horizontalebene liegend in einem Stegabstand voneinander beabstandet angeordnet sind.

10. Verlagerungsanlage (1) nach Anspruch 8 und 9, **dadurch gekennzeichnet, dass** in Richtung der Längserstreckung der Abdeckvorrichtung (15) gesehen, jeweils abwechselnd ein erstes Abdeckelement (19-1) und ein zweites Abdeckelement (19-2) angeordnet sind und dabei der erste Steg (18-1) des ersten Abdeckelements (19-1) teilweise zwischen die beiden voneinander beabstandet angeordneten zweiten Stege (18-2) des zweiten Abdeckelements (19-2) hineinragt und die Gelenkanordnung (20) im Überdeckungsbereich der jeweiligen Stege (18-1, 18-2) angeordnet oder ausgebildet ist.

11. Verlagerungsanlage (1) nach einem der Ansprüche 1 bis 5, **dadurch gekennzeichnet, dass** die zumindest eine Abdeckvorrichtung (15) über ihre Längserstreckung als durchgängiger Profilstab ausgebildet ist.

12. Verlagerungsanlage (1) nach einem der vorhergehenden Ansprüche, **dadurch gekennzeichnet, dass** eine Führungsanordnung (21) zur Führung und Abstützung der zumindest einen Abdeckvorrichtung (15) im Bereich des Abgabeabschnitts (8) des Aufnahmekanals (3) vorgesehen ist und die Führungsanordnung (21) auf die vom Aufnahmekanal (3) abgewendete Seite über die Bodenfläche (5) hinaus vorragend ausgebildet ist.

13. Verlagerungsanlage (1) nach Anspruch 12, **dadurch gekennzeichnet, dass** die Führungsanordnung (21) in Querrichtung bezüglich der Länge (6) des Aufnahmekanals (3) sowie in einer Normalebene auf die Horizontalebene gesehen einen konvex gekrümmten Längsverlauf in Richtung auf die von der Bodenfläche (5) abgewendete Seite aufweist.

14. Verlagerungsanlage (1) nach einem der vorhergehenden Ansprüche, **dadurch gekennzeichnet, dass** der Aufnahmekanal (3) auf seiner von der Bodenfläche (5) abgewendeten Oberseite von einem Spaltenboden (22) abgedeckt ist.
